Europäisches Patentamt

European Patent Office

Office européen des brevets

(11) Veröffentlichungsnummer: **0 386 491**
**A1**

## (12) EUROPÄISCHE PATENTANMELDUNG

(21) Anmeldenummer: 90102630.2

(22) Anmeldetag: **10.02.90**

(51) Int. Cl.5: **F16F 15/32, F16C 3/02**

(30) Priorität: **28.02.89 DE 3906117**

(43) Veröffentlichungstag der Anmeldung:
**12.09.90 Patentblatt 90/37**

(84) Benannte Vertragsstaaten:
**AT DE ES FR GB IT SE**

(71) Anmelder: **GKN CARDANTEC INTERNATIONAL**
**GESELLSCHAFT FUR ANTRIEBSTECHNIK**
**MBH**
**Westendhof 5**
**D-4300 Essen 1(DE)**

(72) Erfinder: **Schlonski, Albrecht, Dr.-Ing.**
**An der Seilerei 26**
**D-4300 Essen 18(DE)**
Erfinder: **Schedrat, Kurt, Dr.-Ing.**
**Am Teckenberg 27**
**D-4030 Ratingen 6(DE)**
Erfinder: **Faulbecker, Gerd**
**Wolfskuhle 25**
**D-4320 Hattingen 16(DE)**
Erfinder: **Ende, Eberhard**
**Im stillen Winkel 60**
**D-4300 Essen 1(DE)**

(74) Vertreter: **Harwardt, Günther, Dipl.-Ing. et al**
**HARWARDT NEUMANN PATENTANWÄLTE**
**Scheerengasse 2 Postfach 1455**
**D-5200 Siegburg 2(DE)**

(54) **Befestigung eines Wuchtgewichtes an einer rotierenden Welle, insbesondere an einer Kreuzgelenkwelle.**

(57) Die Erfindung betrifft die Befestigung eines Wuchtgewichtes 10 an einer rotierenden Welle 9 über ein Klebeband 11, welches als glasfaserverstärktes Klebeband ausgebildet ist. Die als Fäden 13 ausgebildeten Fasern sind in Wickelrichtung des Klebebandes 11 orientiert. Bevorzugt ist das Klebeband 11 entgegen der Hauptdrehrichtung um die Welle 9 mit mehreren Wicklungen über das Wuchtgewicht 10 gewickelt.

Fig. 2

## Befestigung eines Wuchtgewichtes an einer rotierenden Welle, insbesonderer einer Kreuzgelenkwelle

Die Erfindung betrifft eine Befestigung eines oder mehrerer Wuchtgewichte an einer rotierenden Welle, insbesondere einer Kreuzgelenkwelle.

Bei rotierenden Wellen, insbesondere Gelenkwellen, ist es bekannt, als Wuchtgewichte Blechstreifen vorzusehen und diese durch Punktschweißung in der Nähe der Gelenke, insbesondere an dem Verbindungsrohr, vorzusehen. Die Befestigung der Auswuchtgewichte bedeutet in fast allen Fällen eine Verminderung der Festigkeit des betroffenen Bauteiles, insbesondere wenn mehrere Schweißpunkte vorgesehen sind. Die Schweißpunkte bilden bei einem durchgehenden Blechstreifen unter Belastung Anrißpunkte. Darüberhinaus besteht die Gefahr, daß sich unter Drehmoment die Wuchtgewichte lösen, da eine Verformung stattfindet. Das Bauteil, an dem die Wuchtblechstreifen befestigt sind, wird aufgrund der Drehmomentübertragung tordiert und erfährt eine Verformung, welche sich auch auf die Befestigungspunkte für den Blechstreifen überträgt und diese auf Scherung beansprucht.

Hiervon ausgehend liegt der Erfindung die Aufgabe zugrunde, eine Befestigung für ein Wuchtgewicht vorzuschlagen, die keinen negativen Einfluß auf die dem Drehmoment unterliegenden Bauteile der rotierenden Welle hinsichtlich Dauerfestigkeit der Welle selbst und hinsichtlich der Befestigung der Wuchtgewichte ausübt. Vielmehr soll die Dauerfestigkeit erhöht werden.

Diese Aufgabe wird erfindungsgemäß dadurch gelöst, daß das/die Wuchtgewicht(e) durch ein um die Welle mit zumindestens einer Wicklung gewikkeltes Klebeband auf der Außenfläche der Welle fixiert ist/sind.

Bevorzugt sind dabei mehrere Wicklungen vorgesehen.

Durch die Fixierung des Wuchtgewichtes bzw. der Wuchtgewichte über ein Klebeband sind keine negativen Einflüsse auf das Verbindungsrohr oder die Außenfläche der rotierenden Welle mehr gegeben. Darüberhinaus sorgt das Klebeband insbesondere dann, wenn es über die seitlichen Enden des Wuchtgewichtes hinausgeführt ist, dafür, daß durch die innige Verbindung mit der Außenfläche der Welle, auf der das Wuchtgewicht zu befestigen ist, eine hermetische Abdichtung geschaffen ist. Hierdurch wird Unterrostung durch Feuchtigkeit vermieden.

Es werden also auch die Nachteile vermieden, die nicht unmittelbar mit der Anbringung des Wuchtgewichtes selbst verbunden sind, sondern sich durch Unterrostung bei einem unmittelbar durch Schweißung angebrachten Wuchtblech ergeben.

Nach einem weiteren wesentlichen Merkmal der Erfindung ist vorgesehen, daß das Klebeband ein faserverstärktes, insbesondere glasfaserverstärktes Klebeband ist. Dabei wird vorgeschlagen, daß die Fasern als Fäden und nicht als Kurzfasern ausgebildet sind und von ihrer Lage hauptsächlich in Wickelrichtung orientiert sind. Durch diese Maßnahme werden hohe Festigkeiten erreicht, die auch bei schnell rotierenden Wellen für eine ausreichende Fixierung des Wuchtgewichtes sorgen.

Durch die in Wickelrichtung orientierte Ausrichtung der Fäden wird erreicht, daß diese nur auf Zug unter den auf das Wuchtblech bei Rotation wirkenden Fliehkräften beansprucht werden. In Zugrichtung ist jedoch eine außerordentliche hohe Festigkeit gegeben.

Um ein dauerhaftes Halten des Klebebandes auch bei schnell rotierenden Wellen erreichen zu können, ist in weiterer Ausgestaltung vorgesehen, daß das Klebeband entgegen der Hauptdrehrichtung der Welle um diese gewickelt ist.

Die Befestigungsart nach der Erfindung ist nicht nur auf Gelenkwellen ansich, sondern insgesamt auch auf Rotoren allgemeiner Art übertragbar. Die erfindungswesentlichen Vorteile kommen auch dann zum Tragen, wenn es sich um das Auswuchten von Wellen handelt, die neben einer Drehmomentbeanspruchung der Verschmutzungsgefahr von außen, wie es beispielsweise beim Einsatz in Kraftfahrzeugen der Fall ist, unterliegen.

Ein bevorzugtes Ausführungsbeispiel der Erfindung ist in der Zeichnung schematisch dargestellt.

Es zeigt

Figur 1 eine Kreuzgelenkwelle mit einer erfindungsgemäßen Anordnung eines Wuchtbleches, teilweise geschnitten und

Figur 2 die Fixierung des Wuchtgewichtes auf dem Verbindungsrohr 9 als Detail, im vergrößerten Maßstab.

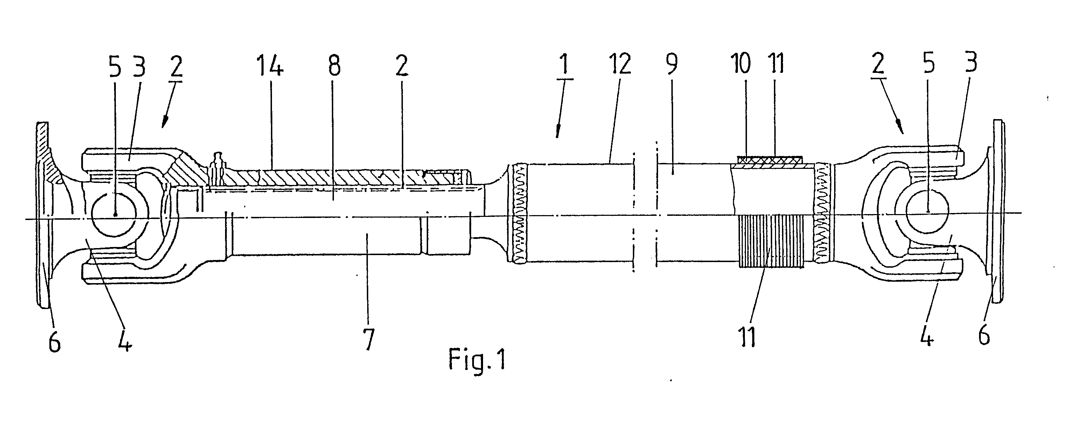

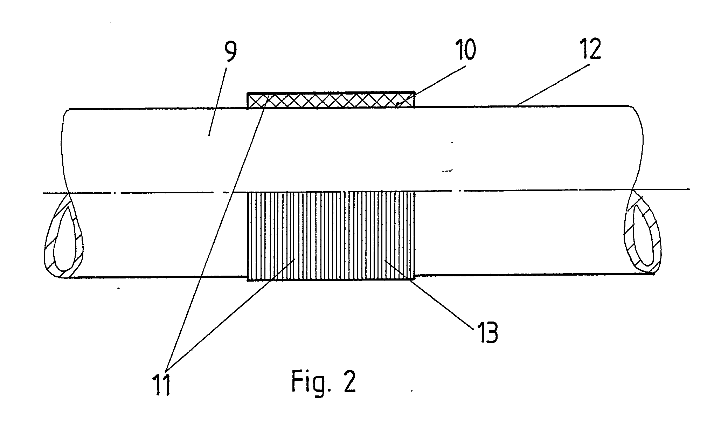

In den Figuren 1 und 2 ist eine Kreuzgelenkwelle 1 dargestellt, welche mit Wuchtblechen 10 nach der Erfindung versehen ist. Die Kreuzgelenkwelle 1 besteht aus zwei Kreuzgelenken 2, welche durch eine Verbindungswelle miteinander drehfest aber eine Relativverstellung zulassend, verbunden sind. Die Kreuzgelenke 2 bestehen aus einer inneren Gelenkgabel 3 und einer äußeren Gelenkgabel 4. Die beiden Gelenkgabeln 3,4 sind über ein Gelenkkreuz 5 miteinander scharnierbar in zwei Ebenen verbunden. Die äußere Gelenkgabel 4 besitzt einen Flansch 6, der zum Anschluß an ein treibendes oder getriebenes Maschinenteil oder Fahrzeugteil dient. Die beiden inneren Gelenkgabeln 3 sind mit Bauteilen, die zur Verbindungswelle gehören, verbunden. So ist eine der inneren Gelenkgabeln 3 Bestandteil eines Verschiebeaußenteils 7. Dieses

weist in seiner Bohrung ein Keilprofil auf, in welchem ein Verschiebeinnenteil 8, das eine dazu passende Keilverzahnung auf seiner Außenfläche besitzt, drehfest aber axial verschiebbar aufgenommen ist. Unter Zwischenschaltung eines Verbindungsrohres 9 ist das Verschiebeinnenteil 8 mit der anderen Innengabel 3 verbunden. Das Verbindungsrohr 9 dient in der Regel zur Anpassung der Länge der Kreuzgelenkwelle 1 an den jeweiligen Anwendungsfall. Die Kreuzgelenkwelle 1 wird nach der Montage gewuchtet, um die erforderliche Rundlaufqualität, die für den jeweiligen Anwendungsfall gefordert ist, zu erreichen. Hierzu dienen Gewichte in Form von Wuchtblechen 10, von denen vorzugsweise eines oder mehrere dem Verbindungsrohr 9 oder dem Verschiebeaußenteil 7 zugeordnet werden.

Wie auch im Zusammenhang mit Figur 2 erkennbar, ist das Wuchtgewicht 10 auf der Außenfläche 12 des Verbindungsrohres 9 bzw. der Welle durch das Klebeband 11 fixiert. Das Klebeband 11 ist als glasfaserverstärktes Klebeband ausgebildet und bevorzugt mit mehreren Windungen, die der Hauptdrehrichtung der Kreuzgelenkwelle 1 entgegengerichtet sind, um die Welle 9 und das Wuchtgewicht 10 gewickelt. Dabei sind die als Fäden 13 ausgebildeten Fasern des Klebebandes 11 in Wikkelrichtung des Klebebandes 11 ausgerichtet. Durch diese Anordnung werden die Fäden 13 bei rotierender Welle aufgrund der auf die Wuchtgewichte 10 wirkenden Fliehkräfte nur in Zugrichtung beansprucht. In Zugrichtung weisen jedoch die Fasern eine besonders hohe Festigkeit auf.

In der Zeichnung ist lediglich die Anordnung eines Wuchtgewichtes 10 dargestellt, es können aber auch mehrere Wuchtgewichte 10 entweder axial nebeneinander oder aber in Umfangsrichtung bezüglich der Welle 9 hintereinander angeordnet sein.

Die Anordnung und Fixierung des Wuchtgewichtes 10 über das Klebeband 11 ist nicht nur auf die Anbringung im Bereich des Verbindungsrohres 9 der Kreuzgelenkwelle 1 anwendbar, sondern es könnte auch eine Anordnung in Nähe des anderen Gelenkes 2 durch Anbringung auf der Außenfläche 14 des Verschiebeaußenteils 7 erfolgen. Die Erfindung ist ferner generell auf Rotoren anwendbar. Ein bevorzugtes Anwendungsgebiet sind jedoch Kreuzgelenkwellen 1 und insbesondere solche, die im Kraftfahrzeugbau Einsatz finden.

Bezugszeichenliste

1 Kreuzgelenkwelle
2 Gelenk
3 Gelenkgabel
4 Gelenkgabel
5 Gelenkkreuz
6 Flansch
7 Verschiebeaußenteil
8 Verschiebeinnenteil
9 Verbindungsrohr
10 Wuchtgewicht
11 Klebeband
12 Außenfläche des Verbindungsrohres
13 Fäden
14 Außenfläche des Verschiebeaußenteiles

## Ansprüche

1. Befestigung eines oder mehrerer Wuchtgewichte an einer rotierenden Welle, insbesondere einer Kreuzgelenkwelle,
dadurch gekennzeichnet,
daß das/die Wuchtgewicht(e) (10) durch ein um die Welle mit zumindest einer Windung gewickeltes Klebeband (11) auf der Außenfläche (12,14) der Welle (7,9) fixiert ist/sind.

2. Befestigung nach Anspruch 1,
dadurch gekennzeichnet,
daß das Klebeband (11) ein faserverstärktes, insbesondere glasfaserverstärktes, Klebeband ist.

3. Befestigung nach Anspruch 2,
dadurch gekennzeichnet,
daß die Fasern (13) Fäden sind, die hauptsächlich in Wickelrichtung orientiert sind.

4. Befestigung nach Anspruch 1,
dadurch gekennzeichnet,
daß das Klebeband (11) entgegen der Hauptdrehrichtung der Welle (7,9) um diese gewickelt ist.

Fig.1

EP 0 386 491 A1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN<br>no. 271 (M)(78)<br>& JP-A-51 81167 (ISHIKAWAJIMA) 21 Januar 1978,<br>* das ganze Dokument *<br>--- | 1, 2 | F16F15/32<br>F16C3/02 |
| A | DE-U-7314611 (DIONYS HOFMAN GMBH)<br>* Seite 1, Zeile 1 - Seite 4, Zeile 15; Figuren *<br>--- | 1, 3 | |
| A | EP-A-15640 (GKN)<br>* das ganze Dokument *<br>----- | 1 | |

| | |
|---|---|
| | **RECHERCHIERTE SACHGEBIETE (Int. Cl.5 )** |
| | F16F<br>F16C |

Der vorliegende Recherchenbericht wurde für alle Patentansprüche erstellt

| Recherchenort | Abschlußdatum der Recherche | Prüfer |
|---|---|---|
| DEN HAAG | 09 JULI 1990 | BOLJANAC T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................
& : Mitglied der gleichen Patentfamilie, übereinstimmendes Dokument